Europäisches Patentamt

European Patent Office

Office européen des brevets

(19)

(11) **EP 0 827 267 B1**

(12) **EUROPÄISCHE PATENTSCHRIFT**

(45) Veröffentlichungstag und Bekanntmachung des Hinweises auf die Patenterteilung:
**27.02.2002 Patentblatt 2002/09**

(51) Int Cl.$^7$: **H02P 7/62**

(21) Anmeldenummer: **96112824.6**

(22) Anmeldetag: **08.08.1996**

(54) **Verfahren zur Bestimmung der Lage des Flussmaximums bei einer permanenterregten oder fremdmagnetisierten Synchronmaschine sowie Vorrichtung zur Durchführung des Verfahrens**

Flux maximum position determining method for permanent magnet or externally excited synchronous machines and device applying this method

Procédé pour déterminer l'orientation du maximum du flux d'une machine synchrone à aimant permanent ou à excitation externe et dispositif pour la mise en oeuvre de ce procédé

(84) Benannte Vertragsstaaten:
**AT CH DE ES FR GB LI SE**

(43) Veröffentlichungstag der Anmeldung:
**04.03.1998 Patentblatt 1998/10**

(73) Patentinhaber: **SIEMENS AKTIENGESELLSCHAFT 80333 München (DE)**

(72) Erfinder:
• **Künzel, Stefan 91056 Erlangen (DE)**
• **Kreienkamp, Ulrich 91058 Erlangen (DE)**

(56) Entgegenhaltungen:
**WO-A-92/01331      US-A- 4 992 710**

• **PATENT ABSTRACTS OF JAPAN vol. 11, no. 217 (E-523), 14.Juli 1987 & JP 62 037085 A (TOSHIBA), 18.Februar 1987,**
• **POWER ELECTRONICS AND APPLICATIONS, Bd. 5, Nr. Drives 1, 13. - 16.September 1993, BRIGHTON, UK, Seiten 311-316, XP000416911 ERTUGRUL ET AL.: "Real-Time Estimation of Rotor Position in PM Motors During Transient Operation"**

## Beschreibung

Die Erfindung betrifft ein Verfahren sowie eine Vorrichtung zur Bestimmung der Lage des Flußmaximums bei einer permanenterregten oder fremdmagnetisierten Synchronmaschine.

Bei der Regelung von permanenterregten oder fremdmagnetisierten Synchronmaschinen hat sich das Verfahren der feldorientierten Regelung etabliert. Dabei wird der Motorstrom bezüglich des magnetischen Flusses in der Synchronmaschine vorgegeben. Da sich bei einem permanenterregten oder fremdmagnetisierten Läufer bzw. Rotor der magnetische Fluß mit der Läuferstellung verändert, kennt man die Lage des magnetischen Flusses nur dann, wenn die Rotorlage und zusätzlich eine eventuell vorhandene Verschiebung der Nullage des Rotorlagemeßsystem zur Lage des Flußmaximums bekannt sind.

In der Regel werden bei permanenterregten oder fremdmagnetisierten Synchronmaschinen inkrementelle bzw. relative Rotorlagemeßsysteme eingesetzt. Ein solches inkrementelles Rotorlagemeßsystem kann beispielsweise auf optischer Basis, z.B. durch Einsatz eines Glasmaßstabes, oder auf magnetischer Basis durch Einsatz eines Resolvers basieren. Durch solche inkrementelle Rotorlagemeßsysteme wird nur eine relative Veränderung der Rotorlage erfaßt. Somit besitzt ein inkrementelles Rotorlagemeßsystem keinen wirklichen Nullpunkt.

Nach jedem Einschalten muß daher - wie bereits erwähnt - eine eventuelle Verschiebung des Nullpunktes zwischen dem Rotorlagemeßsystem und dem Motor-Magnetflußmaximum abgeglichen werden, wenn die Synchronmaschine feldorientiert geregelt betrieben werden soll.

Ein Fehler von mehr als 90° el. in der Orientierung führt bei einer feldorientierten Regelung bereits zu einer Momentenumkehr bei der permanenterregten Synchronmaschine und damit zu einer Mitkopplung im drehzahlgeregelten Betrieb. Die Synchronmaschine beschleunigt dann bis hin zur Abschaltung oder gar Zerstörung. Doch auch bereits eine Abweichung von wenigen Grad elektrisch kann bei einer Feldorientierung zu einem erheblich höheren Spannungsbedarf der Synchronmaschine sowie zu Fehlern bei der Spannungsvorsteuerung führen. Dies trifft um so mehr zu, je größer die elektronische Motorfrequenz und der Fehlwinkel sind. Hinzu kommt, daß die Momentenausbeute bei gleichem Strom sinkt.

Bei bisher bekannten Lösungen wurde daher zusätzlich zu einem inkrementellen bzw. relativen Rotorlagemeßsystem ein absolutes Meßsystem eingesetzt, wobei die Nullmarke und das absolute Meßsystem auf das Maximum der Motor-Magnetflußlage justiert sein müssen. Eine eventuelle Nullpunktverschiebung wird dann abhängig von dem Absolutlagesystem bestimmt.

Die Justage muß jedoch mechanisch sehr genau sein, denn bereits ein Fehler von wenigen Grad elektrisch hat die bereits geschilderten Nachteile wie erhöhten Spannungsbedarf und geringere Momentenausbeute bei gleichem Strom zur Folge. Beispielsweise muß bei einer Polpaarzahl von vier und einer Genauigkeit von 4° el. die Justage auf 1° mechanisch genau erfolgen. Das inkrementelle Meßsystem besitzt somit zusätzlich eine Absolutspur und eine Nullmarke, benötigt zusätzliche Meßleitungen ist somit aufwendiger und kostenintensiver als rein inkrementelles Rotorlagemeßsystem. Beim Einschalten der feldorientierten Regelung der Synchronmaschine muß zunächst die Absolutspur ausgelesen werden und dabei eine eventuelle Nullpunktverschiebung bestimmt werden. Dies kann jedoch nur relativ grob im Rahmen der Auflösung der Absolutspur geschehen. Erst beim Überfahren der Nullmarke kennt man die Nullpunktverschiebung genau und kann eine Feinjustage durchführen. Ist die Polpaarzahl der Synchronmaschine jedoch sehr groß, beispielsweise größer als 10, so kann die erforderliche Genauigkeit bei der Justage der Absolutspur in der Regel nicht mehr sicher erbracht werden, was zur Folge hat, daß derartige Synchronmaschinen nur schlecht für eine feldorientierte Regelung eingesetzt werden können.

Bei einer zyklischen Vertauschung der Motorzuleitungen einer dreiphasigen Synchronmaschine führt jedoch auch dieses bekannte Verfahren zu einer Fehlorientierung von 120°, so daß die Synchronmaschine dann im drehzahlgeregelten Betrieb bis zur Abschaltung beschleunigt, was Gefahren für Mensch und Maschine nach sich ziehen kann. Bei Synchronmaschinen mit einer Hohlwelle, beispielsweise einem Direkt-Spindel-Antrieb an einer Drehmaschine, muß ein Hohlwellen-Rotorlagemeßsystem zum Einsatz kommen. Solche Meßsysteme sind jedoch sehr teuer. Das kostengünstigste derartige Meßsystem mit der erforderlichen Auflösung ist ein Zahnradgeber, welcher allerdings keine Absolutspur besitzt. Aus diesem Grund muß in der Regel auf ein sehr teueres optisches Hohlwellenmeßsystem ausgewichen werden, wenn eine Absolutspur erforderlich ist. Da Direkt-Antriebe in der Regel vom Anwender montiert werden, bestünde dann in der Praxis auch das Problem, daß die aufwendige und kostenintensive Justage der Absolutspur und der Nullmarke vom Anwender ausgeführt werden müssen. Die hierzu erforderlichen Spezialeinrichtungen sind auf Seiten der Anwender jedoch in der Regel nicht vorhanden.

Ein gattungsgemäßes Verfahren ist aus der internationalen Offenlegungsschrift 92/01331 bekannt. Bei diesem Verfahren zur geberlosen Lageerfassung des Rotors einer permanenterregten Synchronmaschine generiert der Stromrichter vorbestimmte Spannungssprünge und es werden Stromwerte gemessen. Aus dem generierten Spannungsraumzeiger und der zeitlichen Änderung des Stromraumzeigers wird ein Quotient gebildet, der winkelabhängig ist. Dieser winkelabhängige Quotient wird als komplexe differentielle Induktivität bezeichnet. Aus dieser komplexen differentiellen Induktivität wird die Polradlage der Synchronmaschine berechnet. Dazu wird die näherungsweise sinusförmige mit dem doppelten Wert des gesuchten Drehwinkels schwankende differentielle Induktivität mit den drei Messwerten zur Deckung gebracht. Außerdem wird zum Start der Maschine, zur Bestimmung der Magnetisierungsrichtung des Rotors, ein einziges Mal ein relativ großer Stromraumzeiger eingeprägt und sofort die komplexe differentielle Induktivität berechnet und ihren Betrag bestimmt. Sodann wird ein Stromraumzeiger in die Gegenrichtung zum zuvor eingeprägten Stromraumzeiger eingeprägt und wiederum der Betrag berechnet. Der gesuchte Drehwinkel stimmt mit der Magnetisierungsrichtung der Minima der zwei zuvor berechneten Beträge überein.

Nachteilig bei diesem Verfahren ist, dass die eindeutige Bestimmung der Magnetisierungsrichtung des Rotors in zwei Schritten erfolgt, wobei Spannungsimpulse mit unterschiedlicher Spannungszeitfläche beaufschlagt werden Aufgabe der vorliegenden Erfindung ist es daher, ein Verfahren sowie eine dazugehörige Vorrichtung derart zu gestalten, dass die Lage des Flußmaximums bei einer permanenterregten Synchronmaschine einfacher ermittelt werden kann. Außerdem soll aufgrund einer Messung zum einen das Absolutmeßsystem und dessen Justage eingespart werden können, zum anderen sollen die Gefahren einer Vertauschung der Motorzuleitungen einer mehrphasigen Synchronmaschine umgangen werden. Somit soll ein präventiver Schutz vor einer Zerstörung der Synchronmaschine bei längerer Begrenzung des Drehzahlreglers oder beim Überschreiten der Maximaldrehzahl geschaffen werden.

Diese Aufgabe wird zusammen mit den Verfahrensschritten des Oberbegriffs des Anspruchs 1 mit den folgenden Verfahrensschritten des kennzeichnenden Teils des Anspruchs 1 gelöst:

1.3 über die ermittelten Stromanstiegswerte wird mittels einer Kreuzkorrelation mit einer vorgebbaren Vergleichsfunktion das Maximum der Kreuzkorrelationsfunktion bestimmt,
1.4 als Vergleichsfunktion zur Durchführung der Kreuzkorrelation wird eine Funktion gewählt, deren Wert bei einem Winkel von 0 Grad bzw. von 360 Grad maximal ist und die ansonsten einen abfallenden Verlauf gegen Null aufweist,
1.5 die Lage des Flußmaximums wird anhand des zu dem Maximum der Kreuzkorrelationsfunktion gehörenden Spannungsraumzeigers bestimmt,
1.6 die Spannungszeitfläche der Spannungsimpulse wird so gewählt, daß der dadurch eingeprägte Strom eine signifikante Sättigung bzw. Entsättigung des Jochs gewährleistet.

In einer vorteilhaften Ausgestaltung des Verfahrens gemäß der vorliegenden Erfindung wird erreicht, daß das Verfahren auch dann, wenn das Joch nicht gesättigt ist, auf sichere Art und Weise durchgeführt werden kann. Dies geschieht durch folgenden weiteren Verfahrensschritt:

2.1 die Spannungszeitfläche der Spannungsimpulse wird so gewählt, daß der dadurch eingeprägte Strom eine signifikante Sättigung bzw. Entsättigung der Ständerzähne zwischen den Nuten gewährleistet.

In einer weiteren vorteilhaften Ausgestaltung des Verfahrens gemäß der vorliegenden Erfindung wird die Spannungszeitfläche speziell auf den eingesetzten Synchronmotor hin optimiert. Dies geschieht durch folgenden weiteren Verfahrensschritt:

3.1 die Spannungszeitfläche der Spannungsimpulse wird so gewählt, daß der Endwert des Stromanstiegs etwa 1/2 des Maschinenmaximalstroms beträgt.

In einer weiteren vorteilhaften Ausgestaltung des Verfahrens gemäß der vorliegenden Erfindung wird der Motorstrom schnellstmöglich wieder auf Null abgebaut. Dies geschieht durch folgenden weiteren Verfahrensschritt:

4.1 nach jedem eingeprägten Spannungsimpuls werden die Maschinenimpulse gelöscht.

In einer weiteren vorteilhaften Ausgestaltung des Verfahrens gemäß der vorliegenden Erfindung wird die Meßgenauigkeit erhöht und der Einfluß von störenden, durch die geschilderten Maßnahmen verursachten Drehungen des Rotors eliminiert. Dies geschieht durch folgenden weiteren Verfahrensschritt:

5.1 sofern eine Drehung des magnetisierten Läufers erfolgt, so wird diese bei der Weiterdrehung des Spannungsraumzeigers berücksichtigt.

In einer weiteren vorteilhaften Ausgestaltung des Verfahrens gemäß der vorliegenden Erfindung wird die Genauigkeit der bestimmten Lage des Flußmaximums über den Meßwertabstand der ermittelten Werte hinaus erhöht. Dies geschieht durch folgenden weiteren Verfahrensschritt:

6.1 es wird zwischen den ermittelten Stromanstiegsmeßwerten interpoliert.

In einer weiteren vorteilhaften Ausgestaltung des Verfahrens gemäß der vorliegenden Erfindung wird eine ganz besonders gut geeignete Vergleichsfunktion eingesetzt. Dies geschieht durch folgenden weiteren Verfahrensschritt:

7.1 als Vergleichsfunktion wird eine auf nicht negative Werte begrenzte Cosinus-Funktion gewählt.

In einer weiteren vorteilhaften Ausgestaltung des Verfahrens gemäß der vorliegenden Erfindung wird erreicht, daß das zu schaffende Verfahren zur Bestimmung der Lage des Flußmaximums sowohl bei gebremster als auch bei ungebremster Synchronmaschine durchführbar ist und daß insbesondere bei einer ungebremsten Synchronmaschine nur eine geringe Bewegung der Motorwelle erfolgt. Dies geschieht durch folgenden weiteren Verfahrensschritt:

8.1 auf einen Spannungsimpuls folgt jeweils der im Bezug auf den Spannungsraumzeiger um 180 Grad verdrehte Spannungsimpuls.

In einer besonders vorteilhaften Anwendungsmöglichkeit des Verfahrens gemäß der vorliegenden Erfindung wird eine Möglichkeit zur Bestimmung der Rotorlage einer ausschließlich mit einem inkrementellen bzw. relativen Rotorlagemeßsystem ausgestatteten Synchronmaschine geschaffen. Dies geschieht durch die Verwendung des Verfahrens gemäß einem der vorstehenden Ansprüche zur Bestimmung der Rotorlage einer permanenterregten Synchronmaschine mit einem ausschließlich inkrementellen Rotorlagemeßgeber, wobei eine mögliche Verschiebung zwischen dem Nullpunkt des inkrementellen Meßgebers und dem Motor-Magnetflußmaximum mittels der bestimmten Lage des Flußmaximums korrigiert wird.

Um das vorangehend geschilderte Verfahren gemäß der vorliegenden Erfindung mit den jeweiligen vorteilhaften Ausgestaltungen auf besonders einfache Art und Weise effektiv und kostengünstig durchführen zu können, wird des weiteren eine Vorrichtung geschaffen, mit der das Verfahren nach Anspruch 1 durchgeführt werden kann. Eine solche Vorrichtung weist gemäß der vorliegenden Erfindung folgende Merkmale auf:

10.1 es sind eine Spannungsquelle und ein Zeitglied mit vorgebbarer Laufzeit zur Generierung von Spannungsimpulsen mit gleicher Spannungszeitfläche vorgesehen,

10.2 es ist ein Zählglied zur Generierung eines Spannungsraumzeigers mit sich in definierten Gradabständen über eine volle Umdrehung bzw. 360 Grad verändernder Wirkungsrichtung vorgesehen,

10.3 es ist ein Mittel zum Einprägen der Spannungsimpulse mit dem jeweiligen Spannungsraumzeiger in die Synchronmaschine vorgesehen, insbesondere ein Umrichtersystem,

10.4 es ist ein Meßglied zur Ermittlung des durch die eingeprägten Spannungsimpulse bewirkten Stromanstiegs als eine von der jeweils vorherrschenden Ankerinduktivität der Synchronmaschine funktionsabhängige Größe vorgesehen,

10.5 es ist ein Funktionsglied zur Bildung einer Kreuzkorrelation über die ermittelten Stromanstiegswerte (di) mit einer in einem Speichermittel hinterlegten Vergleichsfunktion vorgesehen,

10.6 es ist ein Mittel zur Bestimmung des zu dem Maximum der Kreuzkorrelationsfunktion gehörenden Spannungsraumzeigers vorgesehen.

In einer vorteilhaften Ausgestaltung der Vorrichtung gemäß der vorliegenden Erfindung wird weiterhin erreicht, daß eine Bestimmung der Lage des Flußmaximums sowohl bei gebremster als auch bei ungebremster Synchronmaschine durchführbar ist und daß insbesondere bei einer ungebremsten Synchronmaschine nur eine geringe Bewegung der Motorwelle erfolgt. Dies geschieht durch folgendes weiteres Merkmal:

11.1 mit Hilfe des Zählglieds sind aufeinanderfolgende jeweils um 180 Grad verdrehte Spannungsraumzeiger generierbar.

Weitere Vorteile und erfinderische Einzelheiten ergeben sich anhand der nachfolgenden Schilderung eines vorteilhaften Ausführungsbeispiels und in Verbindung mit den Figuren. Es zeigt:

FIG 1     ein Blockschaltbild einer Vorrichtung zur Bestimmung der Lage des Flußmaximums bei einer permanenterregten Synchronmaschine zur Ermittlung der Rotorlage dieser Synchronmaschine für eine feldorientierte Regelung derselben,

FIG 2     eine besonders vorteilhafte Vergleichsfunktion,

FIG 3     eine aus den Meßwerten und der in FIG 2 gezeigten Vergleichsfunktion ermittelte Korrelationsfunktion und

FIG 4     eine beispielhafte Strommeßkurve mit Meßwerten in 6°-Abständen mit eingepaßter Vergleichsfunktion.

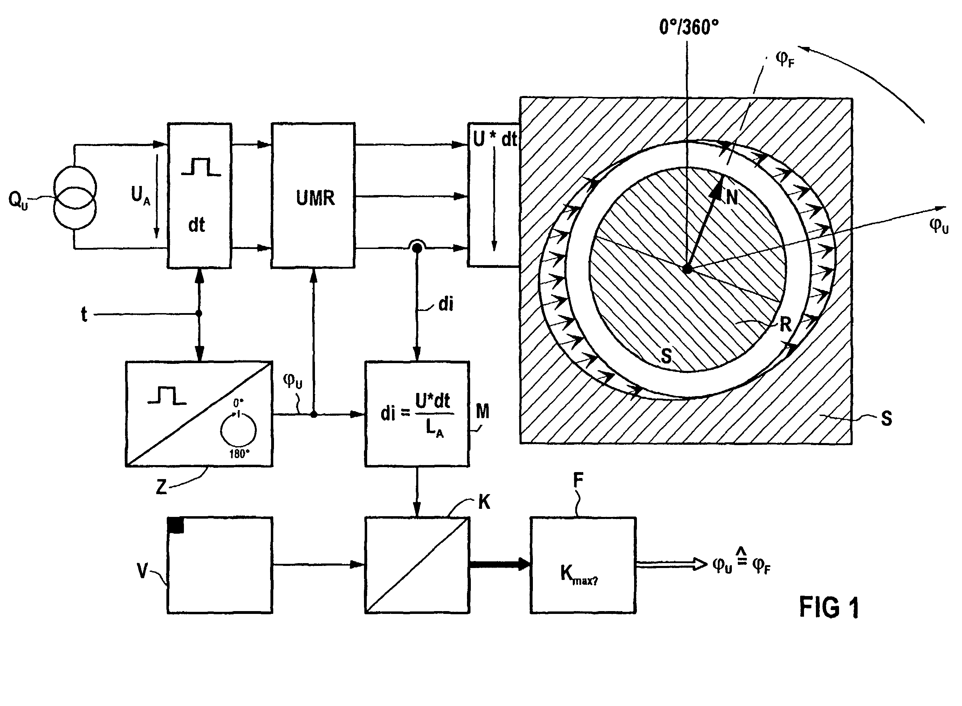

In der Darstellung gemäß der FIG 1 ist ein Blockschaltbild einer Vorrichtung zur Bestimmung der Lage des Flußmaximums bei einer permanenterregten Synchronmaschine mit einem Rotor R und einem Ständer S gezeigt. Der Rotor R bewirkt durch seine Ausrichtung die Lage des Flußmaximums $\varphi_F$. Der in den Ständer S eingeprägte Spannungsraumzeiger $\varphi_U$ ist durch einen in Form von parallel verlaufenden Pfeilen dargestellten Magnetfluß MF veranschaulicht. Dabei ist eine Spannungsquelle $Q_U$ zur Erzeugung einer Ausgangsspannung $U_A$ vorgesehen. Diese Spannung wird auf ein Zeitglied mit variabler Laufzeit dt gegeben, so daß an dem Ausgang des Zeitgliedes Spannungsimpulse U mit konstanter Spannungszeitfläche $\int*U*dt$ zur Verfügung stehen. Diese werden einem Umrichter UMR zugeführt, über den die Spannungsimpulse U mit konstanter Spannungszeitfläche $\int*U*dt$ in die Synchronmaschine eingeprägt werden.

Die vorliegende Erfindung macht sich dabei die Erkenntnis zu Nutze, daß die Ankerinduktivität $L_A$ der Synchronmaschine mit der magnetischen Sättigung kleiner wird. Häufig wird der magnetische Kreis der Synchronmaschine so ausgelegt, daß das Eisen kurz vor der Sättigung steht oder bereits gesättigt ist. Selbst wenn das Joch der Synchronmaschine nicht gesättigt ist, so sind doch in der Regel die Zähne des Ständers S zwischen den Nuten aufgrund deren geringeren Eisenquerschnitts gesättigt. Ein Strom, der eine magnetische Wirkung in Richtung der Motor-Magnetflußlage hat, treibt das Eisen weiter in die Sättigung. Ein solcher Strom wird als Strom in Flußrichtung bezeichnet. Ein Strom entgegen der Flußrichtung wirkt hingegen entsättigend. Prägt man nun einen Spannungsimpuls mit der Spannungszeitfläche $\int*U*dt$ in die Synchronmaschine ein, so ergibt sich nach folgender Berechnungsvorschrift

$$di = U*dt/L_A$$

ein Stromanstieg, welcher von der Ankerinduktivität $L_A$ abhängig ist. Dabei muß der Unterschied des Stromanstiegs, welcher sich bei der Einprägung zweier um 180 Grad phasenverschobener Spannungsimpulse einstellt, signifikant sein, um Einflüsse des Meßrauschens auszuschließen. Die einzuprägenden Spannungsimpulse werden daher so bemessen, daß eine Signifikanz gewährleistet ist.

Für eine Bestimmung der Lage des Flußmaximums $\varphi_F$ werden daher nun Spannungsimpulse mit gleicher Spannungszeitfläche $\int*U*dt$ an die Synchronmaschine ausgegeben, wobei die Wirkungsrichtung dieser Spannungsimpulse durch Drehung des Raumzeigers in festen Gradabständen über 360° elektrisch gedreht wird. Dazu ist ein Zählglied Z vorgesehen, welches an seinem Ausgang mit jedem Zählimpuls t einen Spannungsraumzeiger $\varphi_U$ bereitstellt, der in einem fest vorgebbaren Gradabstand um eine Einheit über 360° weitergedreht ist. Legt man einen Gradabstand in ganzen Gradwerten zugrunde, so wird der Spannungsraumzeiger $\varphi_U$ beispielsweise ausgehend von 0° mit jedem weiteren Spannungsimpuls um 1° verändert.

Handelt es sich um eine ungebremste Synchronmaschine, d.h. der Rotor kann durch die eingeprägten Spannungsimpulse gedreht werden, so wird gemäß der vorliegenden Erfindung auf einen Spannungsimpuls immer der Spannungsimpuls mit einem um 180° verdrehten Spannungsraumzeiger $\varphi_U$ generiert. Dies hat zur Folge, daß die durch den Strom hervorgerufene Drehung des Rotors R der Synchronmaschine in die eine Richtung durch eine etwa gleich große Drehung in die entgegengesetzte Richtung kompensiert wird und so die absolute Drehung bei einem ungebremsten Motor minimiert wird. In bezug auf das bereits erwähnte Zählglied Z bedeutet dies, daß die am Ausgang bereitgestellten Spannungsraumzeigerwinkel $\varphi_U$ in festen Gradabständen über 360° laufen, dabei jedoch aufeinanderfolgende Werte jeweils um 180° verdreht sind. Um den Läufer R weiter zu stabilisieren, wird nach jedem um 180° verdrehten Spannungsraumzeiger um weitere 90° versetzt. Anhand eines Beispiels bedeutet dies, daß zuerst ein Spannungsraumzeiger $\varphi_U$ von 0° dann von 180°, dann von 90°, dann von 270°, dann von 1°, dann von 181°, dann von 91°, dann von 271° usw. ausgegeben wird. Dieser Spannungsraumzeiger $\varphi_U$ wird ebenfalls an den Umrichter UMR weitergeleitet.

Bei jedem Spannungsimpuls U mit konstanter Spannungszeitfläche wird der Stromanstieg di gemessen und mit dem zugehörigen Winkel des Spannungsraumzeigers $\varphi_U$ aufgezeichnet.

Dazu wird der jeweils ermittelte Stromanstieg di an ein Meßglied M geführt, dem auch der am Ausgang des Stellglieds Z anstehende jeweilige aktuelle Spannungsraumzeiger $\varphi_U$ zugeführt wird. Aus den aufgezeichneten Werten kann das Maximum der Meßwerte und der dazu gehörige Spannungsraumzeiger $\varphi_U$ ermittelt werden. Aufgrund der Nutung, der Meßgenauigkeit und anderen Effekten ergibt sich aber häufig kein glatter Verlauf der Stromanstiegswerte di über den Spannungsraumzeigerwinkel $\varphi_U$ und auch das Maximum des Stromanstiegs $di_{max}$ entspricht nicht immer exakt der gesuchten Nullpunktverschiebung.

Über eine darauffolgende Funktionseinheit K wird deshalb nicht lediglich das Maximum des Stromanstiegs $di_{max}$ aufgesucht, sondern es werden die gesamten Meßwerte, die Stromanstiegswerte di, zum Ergebnis herangezogen. In der Funktionseinheit K wird eine Kreuzkorrelation der Meßwerte mit einer Vergleichsfunktion gebildet, welche in einem Speicherglied V hinterlegt ist. Die Vergleichsfunktion ist frei vorgebbar und wird so gebildet, daß sie den erwarteten Verlauf der Stromanstiege di über den Spannungsraumzeigerwinkel $\varphi_U$ widerspiegelt, wobei das Maximum der Vergleichsfunktion bei dem Winkel von 0° bzw. 360° auftritt. Im Fall eines sinusförmigen Flußverlaufes kann hierzu z.B. vorteilhaft eine auf nicht negative Werte begrenzte Cosinus-Funktion eingesetzt werden.

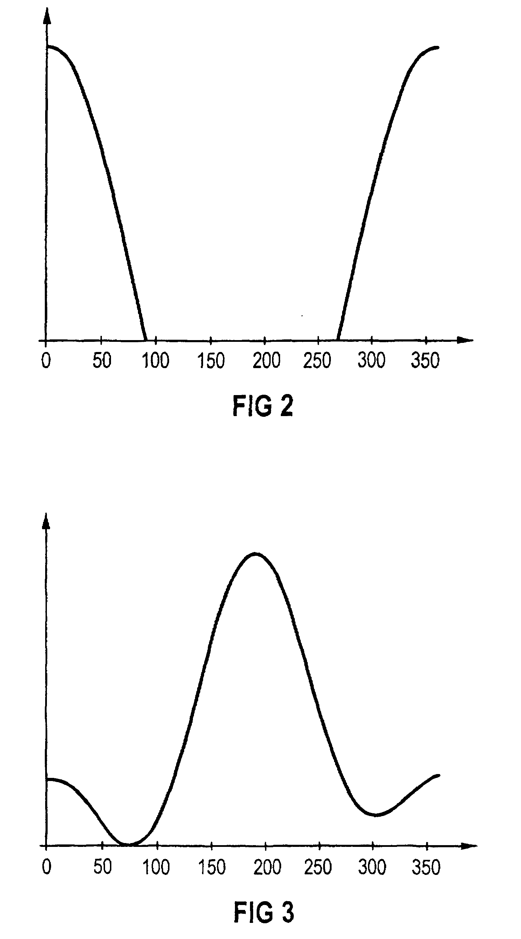

Praktische Versuche haben gezeigt, daß das Verfahren gemäß der vorliegenden Erfindung bezüglich der Wahl unterschiedlicher Vergleichsfunktionen ziemlich robust ist. Voraussetzung ist jedoch, daß die Vergleichsfunktion eine Funktion darstellt, die bei einem Winkel von 0° bzw. 360° ihre maximalen Werte aufweist und ansonsten einen abfallenden Verlauf gegen 0 zeigt. Ein Beispiel für die genannte Vergleichsfunktion ist in der Darstellung gemäß FIG 2 gezeigt, wobei die jeweiligen Werte über eine volle Umdrehung von 0 bis 360° über die Abszisse aufgetragen sind.

Ein Beispiel für eine sich aus der Kreuzkorrelation zwischen Stromanstiegswerten di und der Vergleichsfunktion ergebende Korrelationsfunktion ist in der Darstellung gemäß FIG 3 gezeigt, wobei ebenfalls die Funktionswerte über eine volle Umdrehung von 0 bis 360° über die Abszisse aufgetragen sind.

Nach Berechnung der Kreuzkorrelation ergibt das Maximum der Kreuzkorrelationsfunktion den gesuchten Winkel $\varphi_F$ der Lage des Flußmaximums. Dieses Maximum der Kreuzkorrelationsfunktion wird in einem weiteren Funktionsglied F ermittelt. Um trotz weniger Meßwerte eine höhere Genauigkeit als den Meßwertabstand zu erzielen, wird gemäß der vorliegenden Erfindung zwischen den einzelnen Meßwerten interpoliert und so die Genauigkeit gesteigert.

Die Berechnungen zur Durchführung der Kreuzkorrelation werden im folgenden anhand eines Beispieles dargestellt, bei dem in festen ganzzahligen Gradabständen vorgegangen wird. Die hierzu erforderlichen Berechnungsvorschriften lauten wie folgt:

$$k(\text{winkel}) \;=\; \sum_{x=0}^{360°} i(x) * vergl(x - winkel)$$

k(winkel)        Kreuzkorrelation für den Winkel winkel (wird von 0 bis 360 Grad ermittelt)

i(x)                 Stromanstieg (Raumzeigerbetrag) für den Winkel x (wird von 0 bis 360 Grad gemessen).

vergl(x-winkel):     Vergleichsfunktion für den Winkel x-winkel. Sie kann z.B. so gewählt werden:

cos(winkel) für $0 \leq$ winkel $\leq 90$ Grad

vergl(winkel)= 0 für 90 Grad $\leq$ winkel $\leq 270$ Grad

cos(winkel) für 270 Grad $\leq$ winkel $\leq 360$ Grad.

Nach jedem Spannungsimpuls U werden die Motorimpulse gelöscht, um den Motorstrom schnellstmöglich wieder auf 0 abzubauen. Die Spannungszeitfläche $\int *U*dt$ des entsprechenden Zeitgliedes wird so gewählt, daß der Strom ausreicht, eine signifikante Sättigung bzw. Entsättigung in der Synchronmaschine zu erzielen. Selbst wenn das Joch der Synchronmaschine nicht gesättigt ist, so wird die Spannungszeitfläche $\int *U*dt$ doch so gewählt, daß der Strom ausreicht, die Ständerzähne zwischen den Nuten zu sättigen bzw. zu entsättigen.

Im Bereich des Flußmaximums führt ein Strom in Flußrichtung zu einer Eisensättigung und damit zu einer geringeren Ankerinduktivität $L_A$. Dies hat, verglichen mit den Bereichen der Entsättigung, einen größeren Maximalstrom zur Folge. Somit wird das Flußmaximum in dem Bereich gesucht, in dem der Stromanstieg di seine größten Werte erreicht. Dies geschieht, wie bereits erwähnt, mit Hilfe des Meßgliedes M und der darauffolgenden Funktionseinheiten K und F. Der zu dem Maximum der Kreuzkorrelationsfunktion zugehörige Spannungsraumzeiger $\varphi_U$ entspricht dann dem Raumzeiger $\varphi_F$ des Flußmaximums und damit ist die gesuchte Nullpunktverschiebung von Rotorlagemeßsystem und Flußmaximum gefunden.

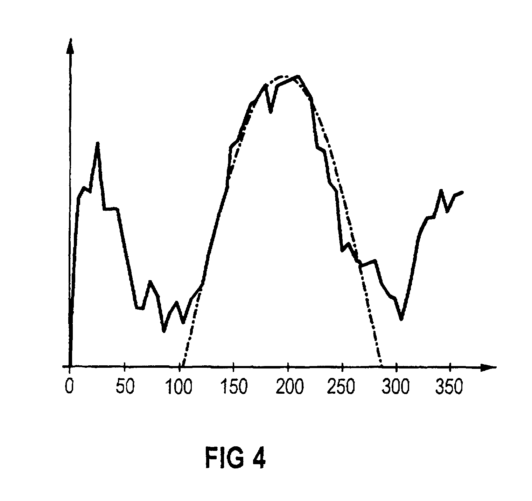

In der Darstellung gemäß FIG 4 ist eine Strommeßkurve mit Meßwerten in 6°-Abständen mit eingepaßter Vergleichsfunktion gezeigt. Der dabei ermittelte Winkel des Spannungsraumzeigers $\varphi_U$, welcher zum Maximum der Kreuzkorrelationsfunktion zugehörig ist, beträgt dabei mit Interpolation 191°. An dieser Stelle befindet sich somit auch die Lage des Flußmaximums $\varphi_F$. Mit Kenntnis dieser Lage des Flußmaximums $\varphi_F$ läßt sich somit auch eine mögliche Verschiebung zwischen dem Nullpunkt des inkrementellen Meßgebers einer permanenterregten Synchronmaschine und dem Motor-Magnetflußmaximum bestimmen und so die Rotorlage auch bei einem Einsatz eines ausschließlich inkrementellen Meßgebers ermitteln. Damit ist eine feldorientierte Regelung der permanenterregten Synchronmaschine mit ausreichender Genauigkeit möglich. Das bedeutet, daß der Spannungsbedarf der Synchronmaschine möglichst gering ist und die Momentenausbeute entsprechend hoch ausfällt.

Bei praktischen Versuchen hat sich gezeigt, daß das Verfahren und die Vorrichtung gemäß der vorliegenden Erfindung zu einer hohen Genauigkeit führen. Es können für die Wiederholgenauigkeit typischerweise Werte kleiner als 1° el. erreicht werden, für die absolute Genauigkeit bei etwa 2° el. Diese Genauigkeit verschlechtert sich dann, wenn die Spannungszeitfläche ∫*U*dt so stark verringert wird, daß der Stromanstieg di nicht mehr zu signifikanten Sättigungserscheinungen führt. Dies kann jedoch an den Meßwerten di erkannt werden. Der Bereich des Maximums muß deutlich höhere Stromanstiegswerte besitzen, als der um 180° verschobene Bereich. Ist dies nicht gewährleistet, so wird die Messung mit größerer Spannungszeitfläche ∫*U*dt wiederholt.

Als Richtwert kann die Spannungszeitfläche ∫*U*dt etwa so gewählt werden, daß sich als Endwert des Stromanstiegs di etwa die Hälfte des Motormaximalstromes ergibt. Selbstverständlich sind jedoch auch andere Spannungszeitflächen ∫*U*dt verwendbar, je nachdem welcher Typ von Synchronmaschinen zum Einsatz gelangt.

Die vorangehende Beschreibung bevorzugter Ausführungsformen nach der Erfindung sind zum Zwecke der Veranschaulichung angegeben. Diese sind nicht erschöpfend. Auch ist die Erfindung nicht auf die genaue angegebene Form beschränkt, sondern es sind wie in den nachfolgenden Ansprüchen beansprucht zahlreiche Modifikationen und Änderungen im Rahmen der vorstehend angegebenen technischen Lehre möglich. Eine bevorzugte Ausführungsform wurde gewählt und beschrieben, um die prinzipiellen Details der Erfindung und praktische Anwendungen zu verdeutlichen, um den Fachmann in die Lage zu versetzen, die Erfindung zu realisieren. Eine Vielzahl bevorzugter Ausführungsformen sowie weitere Modifikationen kommen bei speziellen Anwendungsgebieten in Betracht.

## Patentansprüche

1. Verfahren zur Bestimmung der Lage des Flußmaximums ($\varphi_F$) bei einer permanenterregten oder fremdmagnetisierten Synchronmaschine mit folgenden Verfahrensschritten:

   1.1 die Synchronmaschine wird mit Spannungsimpulsen (U) mit gleicher Spannungszeitfläche (∫*U*dt) beaufschlagt, wobei deren Wirkungsrichtung durch Drehung des Spannungsraumzeigers ($\varphi_U$) in definierten Gradabständen über eine volle Umdrehung variiert wird,

   1.2 mit jedem Spannungsimpuls (U) wird jeweils ein Stromanstieg (di) als eine von der jeweils vorherrschenden Ankerinduktivität ($L_A$) der Synchronmaschine funktionsabhängige Größe ermittelt,

   **dadurch gekennzeichnet, dass**

   1.3 über die ermittelten Stromanstiegswerte ($di_{max}$) mittels einer Kreuzkorrelation mit einer vorgebbaren Vergleichsfunktion das Maximum der Kreuzkorrelationsfunktion bestimmt wird, dass

   1.4 als Vergleichsfunktion zur Durchführung der Kreuzkorrelation eine Funktion gewählt wird, deren Wert bei einem Winkel von 0 Grad bzw. von 360 Grad maximal ist und die ansonsten einen abfallenden Verlauf gegen Null aufweist, dass

   1.5 die Lage des Flußmaximums ($\varphi_F$) anhand des zu dem Maximum der Kreuzkorrelationsfunktion gehörenden Spannungsraumzeigers ($\varphi_U$) bestimmt wird, und dass

   1.6 die Spannungszeitfläche (∫*U*dt) der Spannungsimpulse (U) so gewählt wird, daß der dadurch eingeprägte Strom eine signifikante Sättigung bzw. Entsättigung des Jochs gewährleistet.

2. Verfahren nach Anspruch 1, mit folgendem weiteren Verfahrensschritt:

   2.1 die Spannungszeitfläche (∫*U*dt) der Spannungsimpulse (U) wird so gewählt, daß der dadurch eingeprägte Strom eine signifikante Sättigung bzw. Entsättigung der Ständerzähne zwischen den Nuten gewährleistet.

3. Verfahren nach Anspruch 1 oder 2, mit folgendem weiteren Verfahrensschritt:

   3.1 die Spannungszeitfläche (∫*U*dt) der Spannungsimpulse (U) wird so gewählt, daß der Endwert des Stromanstiegs (di) etwa 1/2 des Maschinenmaximalstroms beträgt.

4. Verfahren nach einem der vorstehenden Ansprüche, mit folgendem weiteren Verfahrensschritt:

   4.1 nach jedem eingeprägten Spannungsimpuls (U) werden die Maschinenimpulse gelöscht.

5. Verfahren nach einem der vorstehenden Ansprüche, mit folgendem weiteren Verfahrensschritt:

   5.1 sofern eine Drehung des magnetisierten Läufers erfolgt, so wird diese bei der Weiterdrehung des Spannungsraumzeigers ($\varphi_U$) berücksichtigt.

**6.** Verfahren nach einem der vorstehenden Ansprüche, mit folgendem weiteren Verfahrensschritt:

6.1 es wird zwischen den ermittelten Stromanstiegsmeßwerten (di) interpoliert.

**7.** Verfahren nach einem der vorstehenden Ansprüche, mit folgendem weiteren Verfahrensschritt:

7.1 als Vergleichsfunktion wird eine auf nicht negative Werte begrenzte Cosinus-Funktion gewählt.

**8.** Verfahren nach einem der vorstehenden Ansprüche, mit folgendem weiteren Verfahrensschritt:

8.1 auf einen Spannungsimpuls (U) folgt jeweils der im Bezug auf den Spannungsraumzeiger ($\varphi_U$) um 180 Grad verdrehte Spannungsimpuls.

**9.** Verwendung des Verfahrens gemäß einem der vorstehenden Ansprüche zur Bestimmung der Rotorlage einer permanenterregten oder fremdmagnetisierten Synchronmaschine mit einem ausschließlich inkrementellen Rotorlagemeßgeber, wobei eine mögliche Verschiebung zwischen dem Nullpunkt des inkrementellen Meßgebers und dem Motor-Magnetflußmaximum mittels der bestimmten Lage des Flußmaximums ($\varphi_F$) korrigiert wird.

**10.** Vorrichtung zur Durchführung des Verfahrens nach Anspruch 1 mit folgenden Merkmalen:

10.1 es sind eine Spannungsquelle ($Q_U$) und ein Zeitglied (dt) mit vorgebbarer Laufzeit zur Generierung von Spannungsimpulsen (U) mit gleicher Spannungszeitfläche ($\int$*U*dt) vorgesehen,
10.2 es ist ein Zählglied (Z) zur Generierung eines Spannungsraumzeigers ($\varphi_U$) mit sich in definierten Gradabständen über eine volle Umdrehung bzw. 360 Grad verändernder Wirkungsrichtung vorgesehen,
10.3 es ist ein Mittel (UMR) zum Einprägen der Spannungsimpulse (U) mit dem jeweiligen Spannungsraumzeiger ($\varphi_U$) in die Synchronmaschine (R,S) vorgesehen, insbesondere ein Umrichtersystem (UMR),
10.4 es ist ein Meßglied (M) zur Ermittlung des durch die eingeprägten Spannungsimpulse bewirkten Stromanstiegs (di) als eine von der jeweils vorherrschenden Ankerinduktivität ($L_A$) der Synchronmaschine funktionsabhängige Größe vorgesehen,
10.5 es ist ein Funktionsglied (K) zur Bildung einer Kreuzkorrelation über die ermittelten Stromanstiegswerte (di) mit einer in einem Speichermittel (V) hinterlegten Vergleichsfunktion vorgesehen,
10.6 es ist ein Mittel (F) zur Bestimmung des zu dem Maximum der Kreuzkorrelationsfunktion gehörenden Spannungsraumzeigers ($\varphi_U$) vorgesehen.

**11.** Vorrichtung nach Anspruch 12, mit folgendem weiteren Merkmal:

11.1 mit Hilfe des Zählglieds (Z) sind aufeinanderfolgende jeweils um 180 Grad verdrehte Spannungsraumzeiger ($\varphi_U$) generierbar.

**Claims**

**1.** Method for determining the position of the flux maximum ($\varphi_F$) in a permanent-magnet or externally excited synchronous machine, with the following method steps:

1.1 the synchronous machine is acted upon by voltage pulses (U) with the same voltage-time-area ($\int$*U*dt), their direction of effect being varied by rotation of the voltage space vector ($\varphi_U$) in defined degree spacings over a complete revolution,
1.2 with each voltage pulse (U) a current rise (di) is ascertained in each case as a variable that is functionally dependent on the respectively prevailing armature inductance ($L_A$) of the synchronous machine,

**characterized in that**

1.3 the maximum of the cross-correlation function is determined via the current rise values ($di_{max}$) established by means of a cross-correlation with a specifiable comparison function, that
1.4 a function is selected as a comparison function for executing the cross-correlation, the value of which function is maximum at an angle of 0 degrees or 360 degrees and which function otherwise exhibits a progression falling away towards zero, that

1.5 the position of the flux maximum ($\varphi_F$) is determined with reference to the voltage space vector ($\varphi_U$) belonging to the maximum of the cross-correlation function, and that

1.6 the voltage-time-area ($\int$*U*dt) of the voltage pulses (U) is selected such that the current injected thereby guarantees a significant saturation or desaturation of the yoke.

2. Method according to claim 1, with the following further method step:

2.1 the voltage-time-area ($\int$*U*dt) of the voltage pulses (U) is selected such that the current injected thereby guarantees a significant saturation or desaturation of the stator teeth between the grooves.

3. Method according to claim 1 or 2, with the following further method step:

3.1 the voltage-time-area ($\int$*U*dt) of the voltage pulses (U) is selected such that the final value of the current rise (di) is roughly 1/2 the machine maximum current.

4. Method according to any of the preceding claims, with the following further method step:

4.1 following each voltage pulse (U) injected, the machine pulses are suppressed.

5. Method according to any of the preceding claims, with the following further method step:

5.1 if the magnetized rotor is rotated, this is taken into account in the further rotation of the voltage space vector ($\varphi_U$).

6. Method according to any of the preceding claims, with the following further method step:

6.1 interpolation is performed between the current rise measured values (di) ascertained.

7. Method according to any of the preceding claims, with the following further method step:

7.1 a cosine function limited to non-negative values is selected as a comparison function.

8. Method according to any of the preceding claims, with the following further method step:

8.1 a voltage pulse (U) is followed in each case by the voltage pulse rotated by 180 degrees with reference to the voltage space vector ($\varphi_U$).

9. Use of the method according to any of the preceding claims to determine the rotor position of a permanent-magnet or externally excited synchronous machine with an exclusively incremental rotor position encoder, a possible displacement between the zero point of the incremental encoder and the motor magnetic flux maximum being corrected by means of the determined position of the flux maximum ($\varphi_F$).

10. Device for executing the method according to claim 1, with the following features:

10.1 a voltage source ($Q_U$) and a timing element (dt) with a specifiable running time are provided for generating voltage pulses (U) with the same voltage-time-area ($\int$*U*dt),
10.2 a timer (Z) is provided for generating a voltage space vector ($\varphi_U$) with a direction of effect that changes in defined degree spacings over a full revolution or 360 degrees,
10.3 means (UMR), in particular a converter system (UMR), are provided for injecting the voltage pulses (U) with the respective voltage space vector ($\varphi_U$) into the synchronous machine,
10.4 a measuring element (M) is provided for determining the current rise (di) caused by the injected voltage pulses as a variable that is functionally dependent on the respectively prevailing armature inductance ($L_A$) of the synchronous machine,
10.5 a functional element (K) is provided for forming a cross-correlation across the current rise values (di) determined with a comparison function stored in a storage device (V),
10.6 means (F) are provided for determining the voltage space vector ($\varphi_U$) belonging to the maximum of the cross-correlation function.

**EP 0 827 267 B1**

**11.** Device according to claim 12, with the following further feature:

11.1 consecutive voltage space vectors ($\varphi_U$) rotated in each case by 180 degrees can be generated with the aid of the timer (Z).

**Revendications**

**1.** Procédé pour la détermination de la position du maximum de flux ($\varphi_F$) dans une machine synchrone à aimant permanent ou à excitation externe, avec les étapes de procédé suivantes :

1.1 on soumet la machine synchrone à des impulsions de tension (U) ayant une surface tension-temps égale ($\int$\*U\*dt), leur direction d'action étant modifiée par la rotation du vecteur spatial de tension ($\varphi_U$) selon des écarts en degrés définis sur un tour complet,
1.2 avec chaque impulsion de tension (U), on détermine une augmentation de courant (di) en tant que grandeur dépendante selon une fonction de l'inductance d'induit ($L_A$), régnant à chaque fois de façon prédominante, de la machine synchrone,

**caractérisé par le fait que**

1.3 pour les valeurs d'augmentation de courant déterminées ($di_{max}$), on détermine au moyen d'une intercorrélation avec une fonction de comparaison pouvant être prescrite le maximum de la fonction d'intercorrélation,
1.4 on choisit comme fonction de comparaison pour la mise en oeuvre de l'intercorrélation une fonction dont la valeur est maximale pour un angle de 0° ou de 360° et qui a sinon une courbe tendant vers zéro,
1.5 on détermine la position du maximum de flux ($\varphi_F$) à l'aide du vecteur spatial de tension ($\varphi_U$) appartenant au maximum de la fonction d'intercorrélation, et
1.6 on choisit la surface tension-temps ($\int$\*U\*dt) des impulsions de tension (U) de telle sorte que le courant ainsi appliqué garantit une saturation ou une désaturation significative de la culasse.

**2.** Procédé selon la revendication 1, avec l'autre étape de procédé suivante :

2.1 on choisit la surface tension-temps ($\int$\*U\*dt) des impulsions de tension (U) de telle sorte que le courant ainsi appliqué garantit une saturation ou une désaturation significative des dents de stator entre les encoches.

**3.** Procédé selon la revendication 1 ou 2, avec l'autre étape de procédé suivante :

3.1 on choisit la surface tension-temps ($\int$\*U\*dt) des impulsions de tension (U) de telle sorte que la valeur finale de l'augmentation de courant (di) vaut sensiblement 1/2 du courant maximal de machine.

**4.** Procédé selon l'une des revendications précédentes, avec l'autre étape de procédé suivante :

4.1 après chaque impulsion de tension appliquée (U), on efface les impulsions de machine.

**5.** Procédé selon l'une des revendications précédentes, avec l'autre étape de procédé suivante :

5.1 dans la mesure où se produit une rotation du rotor magnétisé, on prend en compte celle-ci lors de la suite de la rotation du vecteur spatial de tension ($\varphi_U$).

**6.** Procédé selon l'une des revendications précédentes, avec l'autre étape de procédé suivante :

6.1 on effectue une interpolation entre les valeurs de mesure d'augmentation de courant (di) déterminées.

**7.** Procédé selon l'une des revendications précédentes, avec l'autre étape de procédé suivante :

7.1 comme fonction de comparaison, on choisit une fonction de cosinus limitée à des valeurs non négatives.

**8.** Procédé selon l'une des revendications précédentes, avec l'autre étape de procédé suivante :

8.1 une impulsion de tension (U) est suivie à chaque fois de l'impulsion de tension tournée de 180° par rapport au vecteur spatial de tension ($\varphi_U$).

**9.** Utilisation du procédé selon l'une des revendications précédentes pour la détermination de la position de rotor d'une machine synchrone à aimant permanent ou à excitation externe avec un capteur de mesure de position de rotor exclusivement incrémentiel, un décalage possible entre le point zéro du capteur de mesure incrémentiel et le maximum de flux magnétique de moteur étant corrigé au moyen de la position déterminée du maximum de flux ($\varphi_F$).

**10.** Dispositif pour la mise en oeuvre du procédé selon la revendication 1 avec les caractéristiques suivantes:

10.1 il est prévu une source de tension ($Q_U$) et un temporisateur (dt) avec temps d'écoulement pouvant être prescrit pour la génération d'impulsions de tension (U) avec surface tension-temps égale ($\int *U*dt$),

10.2 il est prévu un compteur (Z) pour la génération d'un vecteur spatial de tension ($\varphi_U$) avec direction d'action se modifiant selon des écarts en degrés définis sur un tour complet c'est-à-dire de 360°,

10.3 il est prévu un moyen (UMR) pour l'application des impulsions de tension (U) avec le vecteur spatial de tension respectif ($\varphi_U$) dans la machine synchrone (R, S), notamment un système convertisseur (UMR),

10.4 il est prévu un élément de mesure (M) pour la détermination de l'augmentation de courant (di), provoquée par les impulsions de tension appliquées, en tant que grandeur dépendante selon une fonction de l'inductance d'induit ($L_A$), régnant à chaque fois de façon prédominante, de la machine synchrone,

10.5 il est prévu un élément de fonction (K) pour la formation d'une intercorrélation pour les valeurs d'augmentation de courant déterminées (di) avec une fonction de comparaison mémorisée dans un moyen de mémorisation (V),

10.6 il est prévu un moyen (F) pour la détermination du vecteur spatial de tension ($\varphi_U$) appartenant au maximum de la fonction d'intercorrélation.

**11.** Dispositif selon la revendication 12, avec l'autre caractéristique suivante :

11.1 à l'aide du compteur (Z), on peut générer des vecteurs spatiaux de tension ($\varphi_U$) successifs tournés respectivement de 180°.

$Q_U$

$U_A$

dt

UMR

U * dt

t

$\varphi_U$

Z

$di = \dfrac{U*dt}{L_A}$  M

di

V

K

F

$K_{max?}$

$\varphi_U \stackrel{\wedge}{=} \varphi_F$

0°/360°

$\varphi_F$

N

$\varphi_U$

R

S

S

0°
180°

**FIG 1**

**FIG 2**

**FIG 3**

FIG 4